# EUROPEAN PATENT SPECIFICATION

(11) **EP 1 259 397 B1**
(45) Date of publication and mention of the grant of the patent: **06.07.2005**
(21) Application number: 01913247.1
(22) Date of filing: 28.02.2001
(51) Int. Cl.: B60N 2/68

(54) **VEHICLE SEAT ASSEMBLY HAVING A CRADLE SEAT BACK**
FAHRZEUGSITZEINRICHTUNG MIT EINER WIEGERÜCKENLEHNE
ENSEMBLE SIEGE DE VEHICULE A DOSSIER DE SIEGE EN FORME DE BERCEAU

(30) Priority: 29.02.2000 US 185722 P
(43) Date of publication of application: 27.11.2002
(73) Proprietor: Magna Seating Systems Inc., Aurora, Ontario L4G 7K1 (CA)
(72) Inventor: NEALE, Colin, G., Northville, MI 48167 (US)
(74) Representative: Hössle Kudlek & Partner
(86) International application number: PCT/US2001/006712
(87) International publication number: WO 2001/064475

(56) References cited:
- EP-A- 0 886 587
- EP-A- 0 923 461
- US-A- 3 761 127
- US-A- 5 137 329
- US-A- 5 246 271
- US-A- 5 378 043
- US-A- 5 884 968

## Description

### BACKGROUND OF THE INVENTION

### 1. Field of Invention

The present invention relates generally to a seat assembly for use in an automotive vehicle, and more particularly, to a seat assembly having an inner occupant support frame which is movable from an occupant support position to an impact displacement position in response to rear impact loads on the seat assembly.

### 2. Description of the Related Art

Automotive vehicles include seat assemblies for supporting driver and passenger occupants within the vehicle. These seat assemblies include a generally horizontal seat cushion and an upright seat back. The seat back is commonly operatively coupled to the seat cushion by a recliner mechanism for providing pivotal adjustment of the seat back relative to the seat cushion between an upright seating position and a plurality of reclined positions. The vehicle also includes a seat restraint system operable with the seat assembly for maintaining the seat occupant in the seat upon the incident of a sudden impact upon the vehicle.

It is becoming increasing desirable to provide additional safety features within the vehicle and on the seat assembly for safely restraining the occupant in the seat and absorbing energy within the vehicle upon impact.

For example, the seat assembly often includes a head restraint connected to the upper portion of the seat back for protecting the occupant's head during a vehicle accident. Head restraint may be vertically adjustable to accommodate various occupant heights and pivotally adjustable to position the head restraint close to the occupant head to assist in prevent "whiplash" upon vehicle impact. The U.S. Patent no. 5, 378,043 to Viano et al. discloses a head restraint which is pivotally coupled to the seat back whereby upon a rear vehicle impact, the head restraint moves in a forward direction toward the head of the seat occupant.

Seat assemblies may also include displacable seat mechanisms for displacing the entire seat assembly, or the entire seat back, rearwardly upon rear vehicle impact to maintain the occupant in the seat and absorb energy via the movement of the seat. Examples of displacable and energy absorbing seat assemblies are disclosed in U.S. Patent nos. 6,050,637; 6,109,692 and 6,062,642.

US 5 884 968 A discloses a seat assembly according to the preamble of claim 1 and claim 12, respectively.

US 5 044 693 A discloses a seat back structure of an automotive seat comprising a back support plate, plural springs and a torsion bar. The back support plate is supported in a seat back frame by the springs and torsion bar in a resilient way. The provision of the torsion bar avoids the sudden backward movement of the back support plate in case of a front impact which is found in other conventional seat back structures.

US 4 163 807 discloses a vehicle seat of the type having a seat back with a plurality of transverse serpentine springs therein including a regulating apparatus for adjusting the firmness of the lower most springs to adjust the firmness of the seat back in the lumbar region. A torsion spring is wrapped about a vertically extending post in the lower corner of the seat back with the ends thereof operatively engaged with a lumbar plate engaging the seat spring adjacent the lower center portion of the seat back and with an intermediate portion of the spring extending outwardly from the post in engagement with a rotatable cam having surfaces of different radii engagable with the intermediate portion of the spring to vary the force of the torsion spring on the seat spring.

It remains desirable, however, to improve the retention and energy dissipation in a seat assembly to protect an occupant during a vehicle rear impact.

### SUMMARY OF THE INVENTION

The present invention relates to a seat assembly for supporting a seat occupant in an automotive vehicle comprising a seat cushion for support the seat occupant on the seat assembly and a seat back extending longitudinally between a lower portion operatively coupled to the seat cushion and an upper portion for supporting the seat occupant in an upright position. The seat back includes an outer peripheral frame member, an inner occupant support frame operatively connected and supported by the outer peripheral frame member and movable from an occupant support position to an impact displacement position extending rearwardly of the outer peripheral frame member, and a displacable connection member operatively connecting the inner occupant support frame and the outer peripheral frame for maintaining the inner occupant support frame in the occupant support position during normal seat occupant use and for providing movement of the inner occupant support frame to the impact displacement position in response to a predetermined impact load exerted on the seat assembly.

### BRIEF DESCRIPTION OF THE DRAWINGS

Other advantages of the present invention will be readily appreciated as the same becomes better understood by reference to the following detailed description when considered in connection with the accompanying drawings wherein:
Figure 1 is a front view of a seat assembly according to the present invention;
Figure 2 is a perspective view of the seat assembly of Figure 1;
Figure 3 is a perspective view of a linear recliner operatively coupled between a seat back and seat cushion of the seat assembly of Figure 1;
Figure 4 is a perspective view of an inner occupant support frame of the seat assembly of Figure 1;
Figure 5 is a perspective view of a pivot bracket for pivotally attaching a head restraint to the seat back of the seat assembly;
Figure 6 is a cross-sectional side view of the pivot bracket pivotally attaching the head restraint to the seat back;
Figure 7 is a side view of an adjustable lumbar support assembly operatively connected to the inner occupant support frame;
Figure 8 is a perspective view of a lower portion of the linear recliner pivotally attached to the seat cushion;
Figure 9 is a perspective view of an upper portion of the linear recliner pivotally attached to the seat back;
Figure 10 is an alternative embodiment of a linear recliner for attachment between a seat cushion and a seat back;
Figure 11 is yet another alternative embodiment of a linear recliner for attachment between a seat cushion and a seat back;
Figure 12 is a side view of the seat assembly;
Figure 13 is a side view of the seat assembly showing the inner occupant support frame in an occupant support position and an impact displacement position;
Figure 14 is a perspective view of an alternative embodiment of a seat assembly and an inner occupant support frame;
Figure 15 is a perspective view of a displacable connection member of the seat assembly of Figure 14 for providing movement of the inner occupant support frame from an occupant support position to an impact displacement position;
Figure 16 is a front view of another alternative embodiment of a seat assembly and an inner occupant support frame;
Figure 17 is a front view of yet another alternative embodiment of a seat assembly and an inner occupant support frame;
Figure 18 is a front view of still another alternative embodiment of a seat assembly and an inner occupant support frame.

### DETAILED DESCRIPTION OF THE PREFERRED EMBODIMENTS

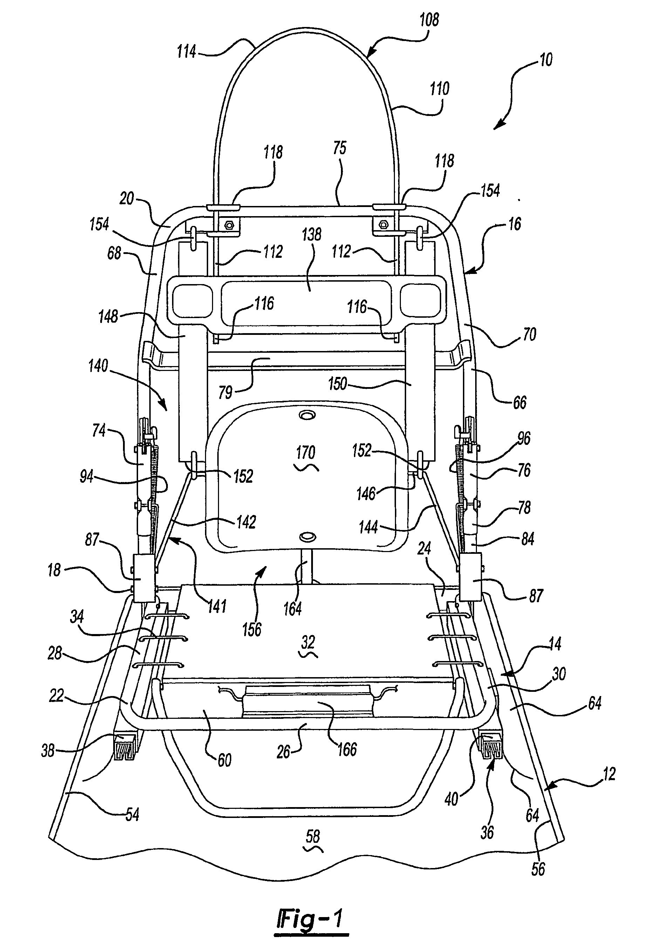

Referring to Figures 1-3, a seat assembly is generally depicted at 10 for supporting a seat occupant in an automotive vehicle, simulated at 12. The seat assembly 10 includes a generally horizontal seat cushion 14 for supporting the seat occupant on the seat assembly 10 and a seat back 16 extending longitudinally between a lower portion 18 operatively coupled to the seat cushion 14 and an upper portion 20. The seat cushion 14 includes a tubular seat cushion frame 22 forming a rigid and generally rectangular support frame having a first cross bar member 24 adjacent to the lower portion 18 of the seat back 16 and an opposing second cross bar member 26 spaced forwardly of the first cross bar member 24. The seat cushion frame 22 further includes spaced apart and opposing inboard and outboard support bar members 28, 30 which extend between the first and second cross bar members 24, 26. A flexible membrane suspension mat 32 is supported between the inboard and outboard support bar members 28, 30 by a plurality of hooks or connecting links 34 for supporting the seat occupant on the seat assembly 10 as is commonly known in the art.

The seat cushion frame 22 is supported on a conventional seat track assembly 36 which extends longitudinally between the first cross bar member 24 and the second cross bar member 26 for providing fore and aft movement of the seat assembly 10 in the vehicle 12, as is commonly known in the art. The seat track assembly 36 includes an inboard and outboard upper track 3 8, 40 slidably coupled to respective inboard and outboard lower tracks 42, 44. A pair of front brackets 46, 48 fixedly secure the respective inboard and outboard support bar members 28, 30 of the seat cushion frame 22 to the respective upper tracks 38, 40 adjacent to the second cross bar member 26. Similarly, a pair of U-shaped rear brackets 50, 52 fixedly secure the respective inboard and outboard support bar members 28, 30 to the respective upper tracks 38, 40 adjacent the first cross bar member 24.

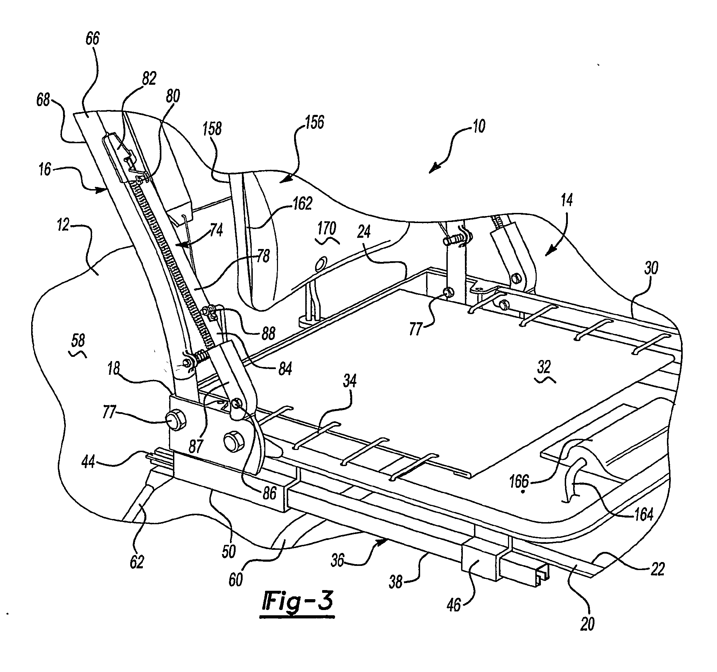

Referring to Figures 1 and 3, the seat track assembly 36, and thus, the entire seat assembly 10 is mounted to and between longitudinal structural elements typically referred to as the central tunnel 54 and outboard sill 56 and supported above the vehicle floor, illustrated at 58, by a pair of support bars 60, 62 which extend laterally between the opposing tunnel 54 and sill 56. More specifically, the lower tracks 42, 44 are mounted and secured to each of the support bars 60, 62 between the tunnel 54 and sill 56. The supporting of the seat assembly 10 above the vehicle floor 58 provides space below the seat cushion 14 for additional storage within the vehicle 12 and additional foot room for a vehicle occupant seated behind the seat assembly 10. The outboard, and potentially exposed, ends of the support bars 60, 62 may be covered and integrated with the sill of the vehicle by being trimmed by floor covering 64 to match the vehicle floor 58.

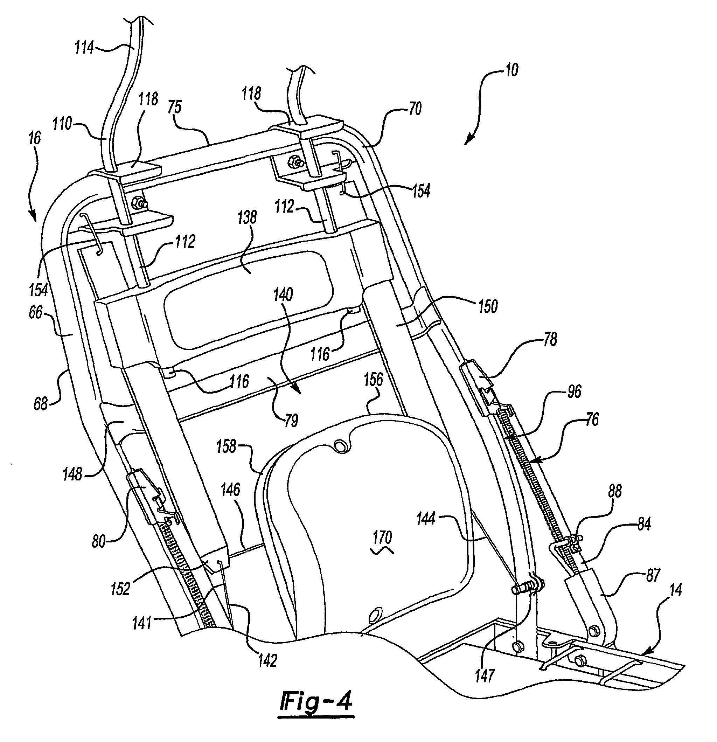

Referring to Figures 1-4, the seat back 16 includes a rigid, tubular, outer peripheral frame member 66 forming a generally U-shaped seat back frame. The outer peripheral frame member 66 includes a pair of spaced apart inboard and outboard side support bars 68, 70 extending longitudinally from a first distal end 72 adjacent the seat cushion 14 and a second end 73 to define a seat occupant back support envelope therebetween. An upper support bar 75 interconnects the second ends 73 of the side support bars 68, 70. The first distal ends 72 of each of the inboard and outboard side support bars 68, 70 are pivotally attached to the respective inboard and outboard rear brackets 50, 52 via pivot pins 77 to provide pivotal reclining movement of the seat back 16 with respect to the seat cushion 14. A rigid support brace 79 further interconnects the inboard and outboard side support bars 68, 70 midway between the first distal ends 72 and the second ends 73 to provide additional structural rigidity to the outer peripheral frame member 66.

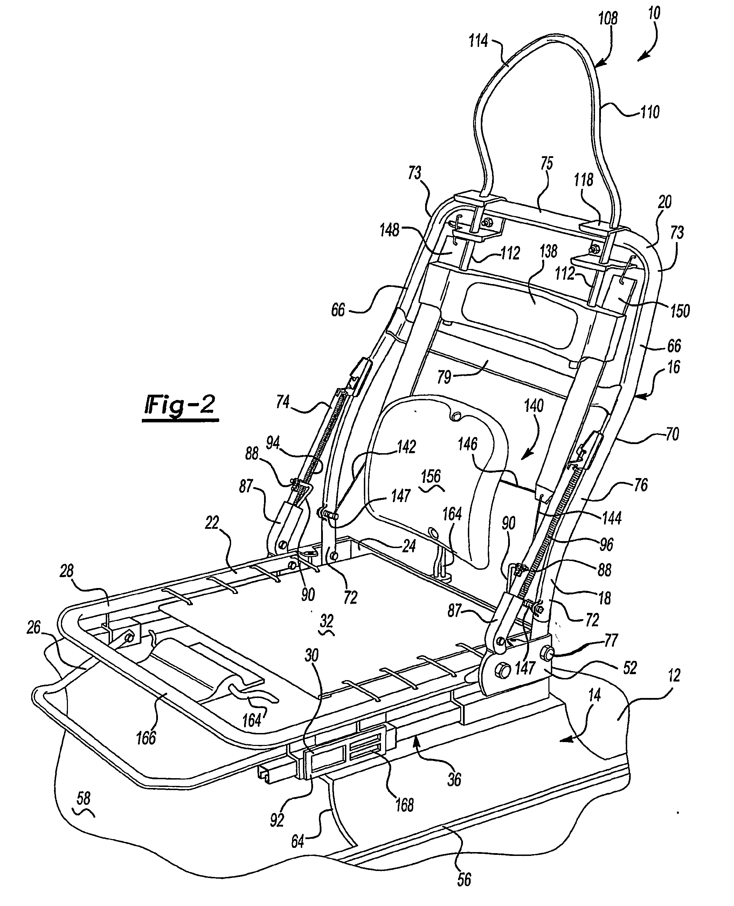

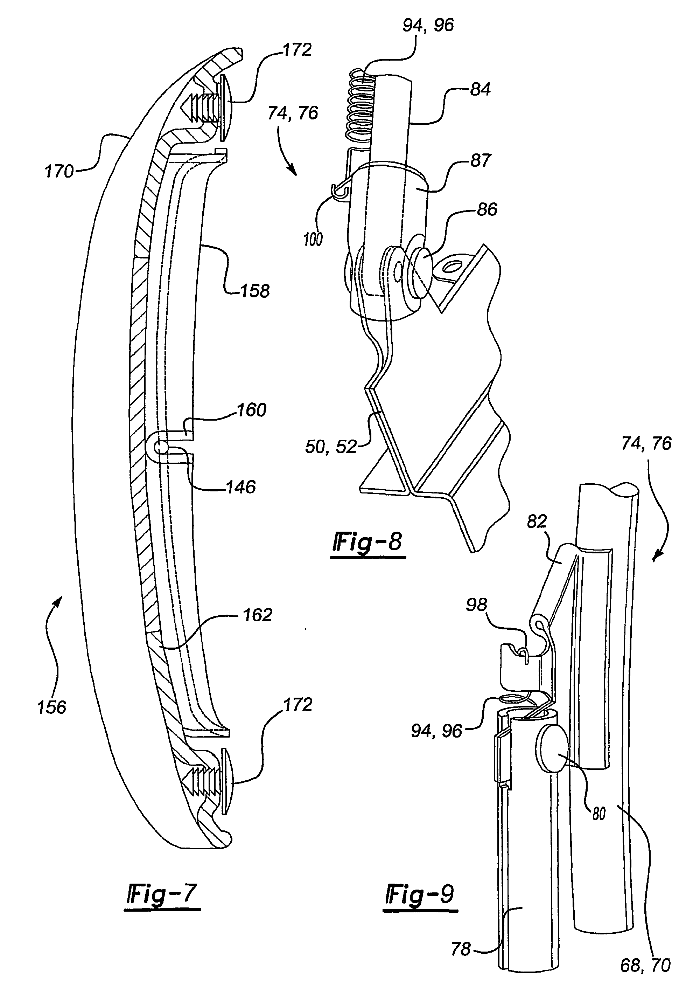

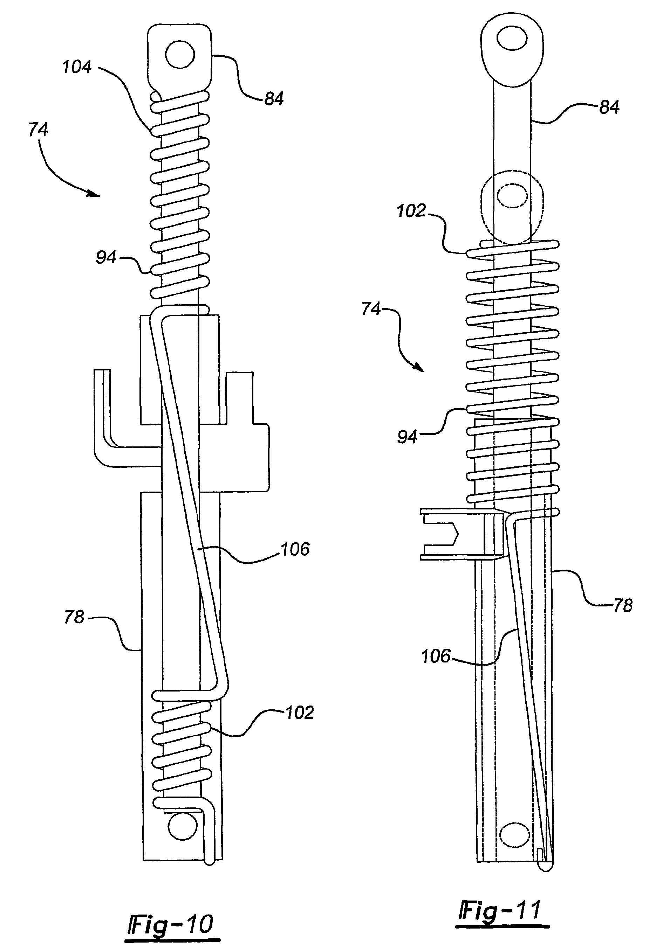

Referring to Figures 1-4 and 8-9, the seat assembly 10 further includes a pair of linear recliner mechanisms 74, 76 coupled between the seat cushion 14 and seat back 16 for selectively adjusting the seat back 16 between a range of angular reclined positions relative to the seat cushion 14. More specifically, each linear recliner mechanism 74, 76 includes an upper cylinder 78 having a first end pivotally attached by pivot pin 80 to a bracket 82 on each respective inboard and outboard side support bar 68, 70 of the outer peripheral frame 66, as shown in Figure 9, and a second open end. The linear recliner mechanisms 74, 76 also include a lower piston 84 having a first end telescopingly received in the open end of the upper cylinder 78 and a second end pivotally attached by pivot pin 86 to the respective rear brackets 50, 52 on the seat cushion frame 22. The second end of the lower piston 84 is spaced forward of the pivot pin 77 connecting the outer peripheral frame 66 of the seat back 16 and the seat cushion frame 22 to complete a triangulated structural frame between the outer peripheral frame 66, the seat cushion frame 22 and the linear recliner mechanisms 74, 76. The second end of the lower pistons 84 and the pivot pins 86 are covered by a tubular trim fairing 87. Referring to Figure 2, each linear recliner mechanism 74, 76 includes a spring bias locking mechanism 88 secured to the upper cylinder 78 and engagable with the lower piston 84 for locking and retaining the linear recliner mechanism 74, 76 within the range of reclined positions. A Bowden-type cable assembly 90 is interconnected between the locking mechanism 88 and a release latch 92 for releasing the locking mechanism 88 and allowing the pivotal movement of the seat back 16 to a desired reclined position. The seat back 16 is biased toward a generally upright position as shown in Figures 1-4 by a pair of tension springs 94, 96 extending between the seat back 16 and the seat cushion 14 adjacent to and inward of the respective linear recliner mechanism 74, 76. More specifically, referring to Figures 8 and 9, each tension spring 94, 96 has a first end 98 connected to the bracket 82 and a second end 100 connected to the respective rear bracket 50, 52. The springs 94, 96 are pulled in tension as the linear recliner mechanisms 74, 76 are released and the seat back 16 is pivoted to a reclined position by the seat occupant. Therefore, when the linear recliner mechanisms 74, 76 are released, the seat back 16 is automatically biased toward the generally upright position.

Referring to Figure 10, an alternative embodiment of a linear recliner mechanism 74 is shown including a tension spring 94 extending between the first end of the upper cylinder 78 and the second end of the lower piston 84. The tension spring 94 includes a first coil portion 102 spiraled around the second end of the lower piston 84 and a second coil portion 104 spiraled around the first end of the lower piston 84. The first and second coil portions 102,104 are joined by a straight torsion bar section 106 seated between the upper cylinder 78 and the lower piston 84.

Referring to Figure 11, another alternative embodiment of a linear recliner mechanism 74 is shown including a tension spring 94 extending between the first end of the upper cylinder 78 and the second end of the lower piston 84. The tension spring 94 includes a coil portion 102 spiraled around a portion of the lower piston 84 adj acent the second end and a straight torsion bar section 106 extending from the first end of the upper cylinder 78 and the coil portion 102 and seated between the upper cylinder 78 and the lower piston 84.

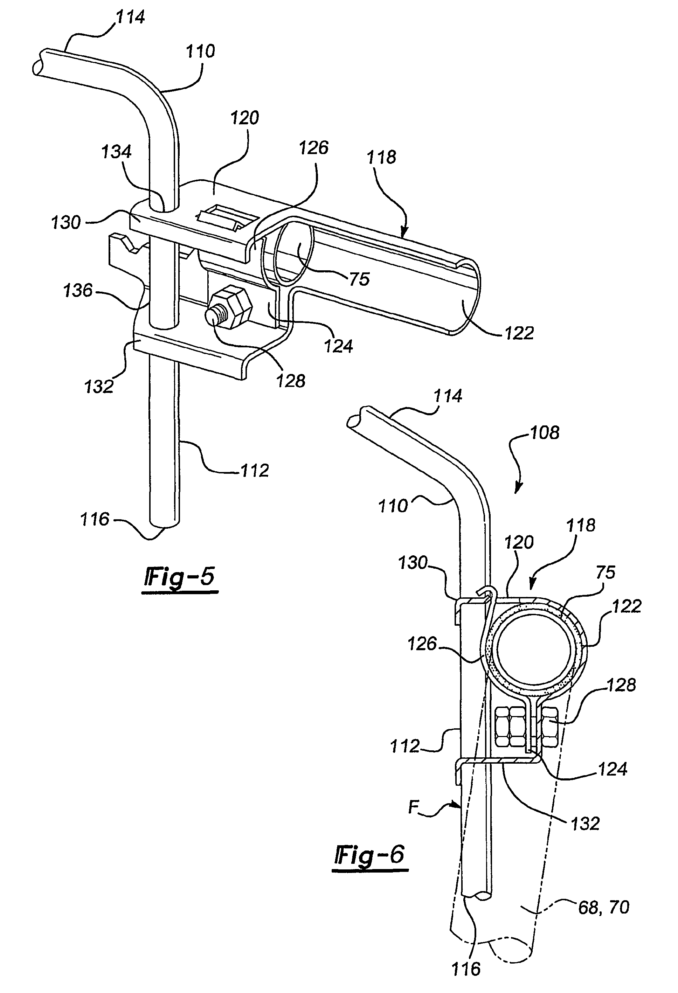

Referring again to Figures 1, 2, 5 and 6, the seat assembly 10 further includes a head restraint 108 operatively connected to the seat back 16. The head restraint 108 includes a generally U-shaped frame member 110 having a tubular, rod or wire construction and defined by a pair of spaced apart head restraint posts 112 and an upper arc portion 114. The upper arc portion 114 may be trimmed by a foam pad and trim cover, as commonly known in the art, and including a center head restraint panel of a transparent material to provide rear view visibility to a front seat occupant. The posts 112 extend from the arc portion 114 above the upper support bar 75 to a distal end 116 spaced below the upper support bar 75. Each of the posts 112 are pivotally attached to the upper support bar 75 by a pivot bracket 118. Referring specifically to Figures 5 and 6, the pivot bracket 118 includes a first plate 120 having a semi-cylindrical base portion 122 in mating engagement with the upper support bar 75 and a second plate 124 having a semi-cylindrical base portion 126 in mating engagement with the upper support bar 75, opposite the semi-cylindrical base portion 122, and encapsulating a portion of the upper support bar 75 therebetween. The second plate 124 is fastened to the first plate 120 by a bolt 128 to provide frictional resistance between the plates 120,124 and the upper support bar 75 while allowing rotation of the plates 120, 124 around the upper support bar 75. The first plate 120 further includes a pair of spaced apart parallel upper and lower flanges 130, 132 extending outwardly from the semi-cylindrical base portion 122. Each of the flanges 130, 132 includes a through hole 134, 136 for receiving one of the head restraint posts 112 and fixedly securing the head restraint frame member 110 to the pivot brackets 118, and thus, the upper support bar 75. The pivot brackets 118 provide frictional resistance and pivotal movement of the head restraint frame member 110 about the upper support bar 75 to support the seat occupant's head, as will be described in more detail herein below.

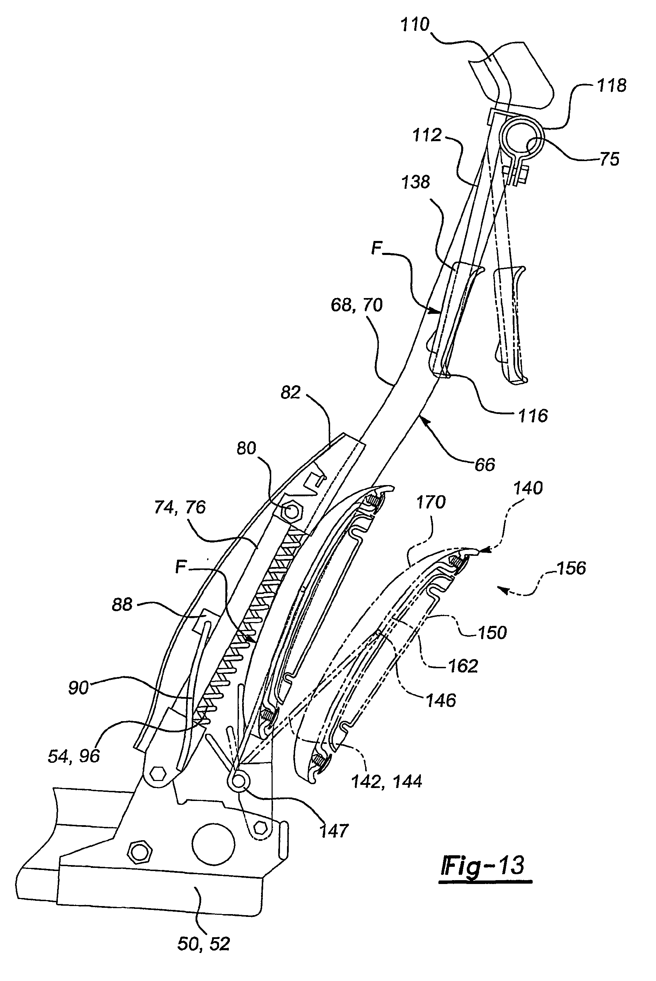

The distal ends 116 of the head restraint posts 112 are interconnected by an upper seat back support plate 138 which extends laterally between the inboard and outboard side supports bars 68, 70 below the upper support bar 75. The upper seat back support plate 138 pivots the head restraint 108 forwardly toward the seat cushion 14 and about the upper support bar 75 in response to a force F being applied to the seat back 16 and upper seat back support plate as shown in Figure 13. The forward pivoting of the head restraint 108 positions the head restraint immediately adjacent the seat occupants head to absorb energy in a rear impact vehicle collision as will be discussed in greater detail below.

Referring to Figures 1, 2, and 4, the seat assembly 10 further includes an inner occupant support frame 140 operatively connected and supported by the outer peripheral frame 66 and movable from an occupant support position to an impact displacement position extending rearwardly of the outer peripheral frame 66. The inner occupant support frame 140 is mounted on a lateral torsion spring element 141 forming spring coils 147 connected to the first distal ends 72 of the respective inboard and outboard side support bar 68, 70 of the outer peripheral frame 66. The torsion spring element 141 includes a pair of spaced apart torsion bars 142, 144 extend upwardly from the first distal end 72 to a torso support bar 146 adjacent the respective inboard and outboard side support bars 68, 70. The torso support bar 146 extends laterally between the opposing inboard and outboard side support bars 68, 70 and is positioned between the support brace 79 and the seat cushion 14 and slightly rearward of the outer peripheral frame 66. In the embodiment of Figures 1-4, the inner occupant support frame 140 further includes a pair of elastic straps 148, 150 extending parallel to the inboard and outboard side support bars 68, 70 between the torso support bar 146 and the upper support bar 75. More specifically, the elastic straps 148, 150 include a first end 152 connected to the torso support bar 146 adjacent the respective torsion bar 142, 144 and a second end 154 connected to the respective pivot bracket 118 of the head restraint 108. Additionally, the upper seat back support plate 138 is positioned forward of the elastic straps 148, 150 and may be operatively connected thereto by the straps 148,150 passing through a slot in each opposing ends of the support plate 138.

Referring to Figures 1, 4 and 7, the inner occupant support frame 140 further includes a four-way adjustable lumbar support assembly 156. The lumbar support assembly 156 includes a generally rectangular and planar support plate 158 having a longitudinally extending U-shaped channel 160 for receiving the torso support bar 146 therein and securing the support plate 158 to the torso support bar 146. A plurality of air bladders 162 are connected to the support plate 158 and in fluid communication via air lines 164 with a pneumatic actuator 166. The pneumatic actuator 166 is secured to the second, or front, cross bar member 26 of the seat cushion frame 22 and operatively connected to an electro-pneumatic controller 168 secured to the outboard support bar member 30. A contoured lumbar back plate 170 is secured to the air bladders 162 via a pair of rivets 172 to provide angular displacement relative to the fixed support plate 158. The controller 168 actuates the pneumatic actuator 166 to pump fluid, in the preferred embodiment air, through the air lines 164 to the plurality of air bladders 162 and adjust the displacement of the lumbar back plate 170 for occupant comfort. Further disclosure and operation of the lumbar support assembly 156 is fully set forth and described in U.S. Patent No. 5,137,329.

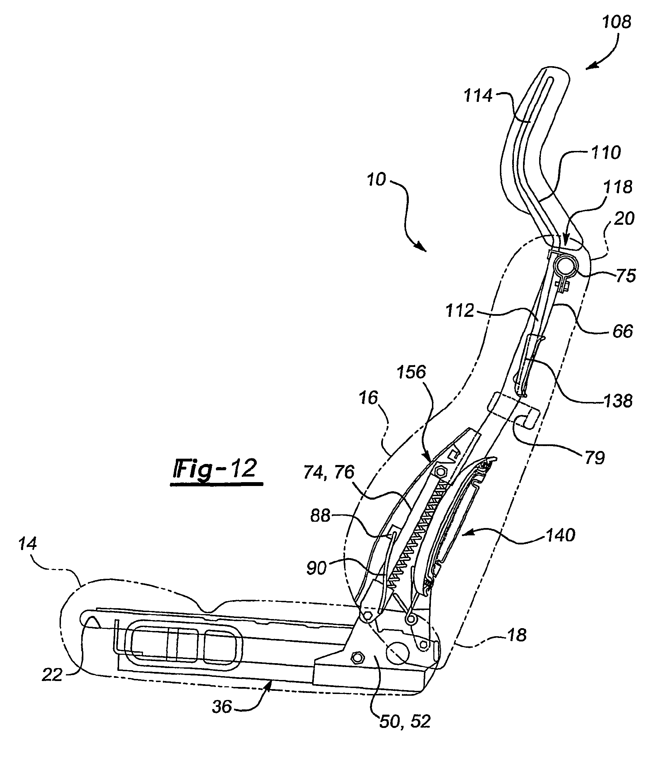

In operation, the inner occupant support frame 140 is displacable relative to the outer peripheral frame 66 from the occupant support position during normal seat occupant use to an impact displacement position in response to a predetermined impact load exerted on the seat assembly 10. More specifically, referring to Figure 12, the seat assembly and inner occupant support frame 140 are shown in the occupant support position. The seat occupant is supported on the seat cushion 14 and the seat back 16. The seat occupant's body, or torso, is supported by the lumbar support assembly 156 and the upper seat back support plate 138 in the occupant support position with the head restraint 108 in a generally upright position as shown in Figure 12. Referring to Figure 13, when a predetermined rear impact force F is exerted on the seat assembly 10, the seat occupant is forced against the seat back 16. The seat occupant exerts a force against the upper seat back support plate 138 which is connected to the frame member 110 of the head restraint 108. Thus, the impact force on the upper seat back support plate 138 pivots, or rotates, the frame member 110 about the pivot brackets 118 forwardly toward the seat cushion 14 to close the distance between the head restraint 108 and the seat occupant's head to protect the seat occupant and absorb impact forces. Further, the seat occupant also exerts a force against the lumbar support assembly 156 which is supported by the inner occupant support frame 140. The elastic straps 148, 150 allow the inner occupant support frame 140 to move, or displace, rearwardly away from the outer peripheral frame 66, as shown in Figure 13, to absorb the rear impact forces exerted on the seat 10. The torsion bars 142, 144 and the torso support bar 146 pivot against the spring bias force of the spring coils 147 and elastic straps 148, 150. Additionally, the seat occupant is displaced within the perimeter of the seat back outer peripheral frame 66 which provides a roll-bar type protective structure around the torso of the seat occupant. Therefore, the seat back 16, including the rigid outer peripheral frame 66 and the displacable inner occupant support frame 140 define a cradle about the seat occupant's torso absorbing the rear impact forces exerted on the seat 10. The spring coils 147 automatically return the inner occupant support frame 140 from the impact displacement position to the seat occupant position and the elastic straps 148, 150, which are coupled to the upper seat back support plate 138, return the head restraint 108 to the generally upright position.

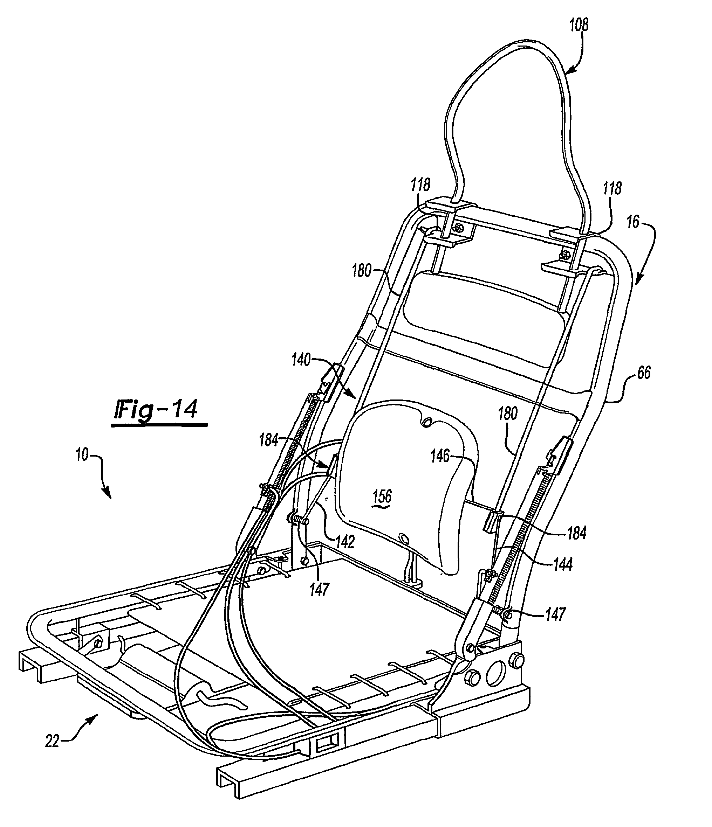

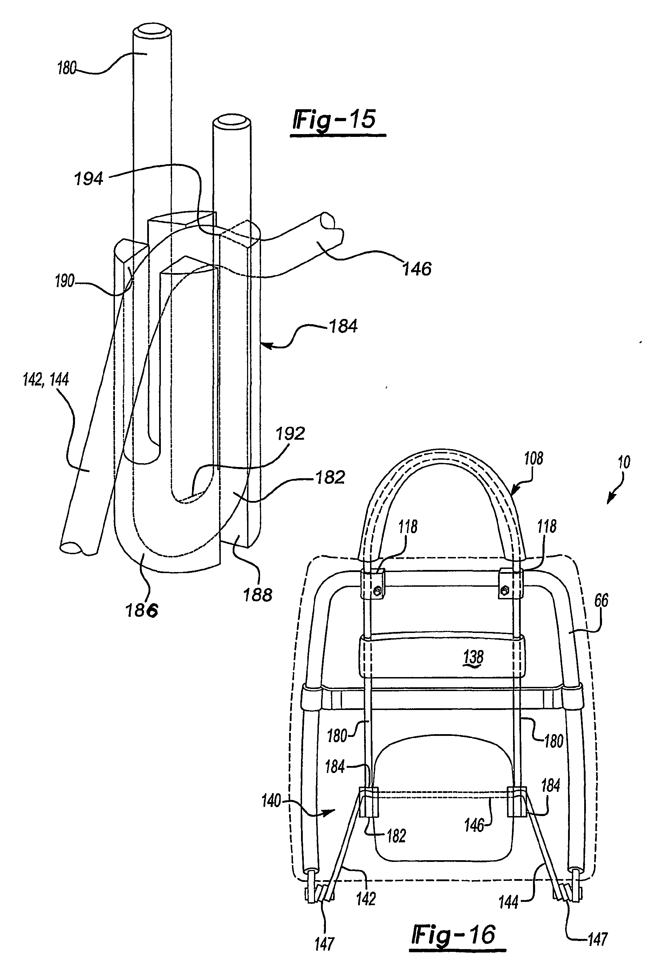

Referring to Figures 14 and 15, an alternative embodiment of a seat assembly 10, and more particularly, an inner occupant support frame 140 is shown. The seat assembly 10 includes a seat back 16 having an outer peripheral frame 66 pivotally connected to a seat cushion frame 22. A head restraint assembly 108 is pivotally attached to the outer peripheral frame 66 as in the prior embodiment. The seat assembly 10 also includes an inner occupant support frame 140 operatively connected to the outer peripheral frame 66. The inner occupant support frame 140 similarly includes a torsion spring element 141 including a pair of torsion bars 142, 144 connected to the outer peripheral frame 66 by spring coils 147 and laterally interconnected by a torso support bar 146. The torso support bar 146 supports a four-way pneumatic lumbar support assembly 156 as previously described. The inner occupant support frame 140 further includes a pair of longitudinally extending wire rods 180, as opposed to the elastic straps 148,150, extending between the respective pivot brackets 118 and the torso support bar 146 adjacent the respective torsion bar 142 ,144. The wire rods 180 include a first end connected to the pivot brackets 118 and a second end forming a U-shaped hook 182 operatively connected to the torso support bar 146. The wire rods 180, and specifically the hooks 182, are connected to the torso support bar 146 by a displacable connection member 184. The interconnection between the wire rods 180 and the torso support bar 146 by the displacable connection member 184 is best shown in Figure15. The displacable connection member 184 includes a cylindrical body portion 186 having a first channel 188 extending longitudinallybetween opposing ends of the body portion 186 and a second channel 190 crossing transverse to the first channel 188 and extending longitudinally between opposing ends of the body portion 186. The channels 188, 190 each include a shelf 192, 194, respectively, for closing a portion of the channel 188, 190 which is fracturable in response to a predetermined load force. The displacable connection member 184 is positioned, or seated, between the hook 182 of each wire rod 180 and the torso support bar 146. More specifically, the hook 182 is seated within the first channel 188 and supported by the shelf 192 and the torso support bar 146 is seated within the second channel 190 and supported by the shelf 194. As shown in Figure 15, the displacable connection member 184 maintains a space between the torso support bar 146 and the hook 182 approximately equivalent to the longitudinal length of the member 184.

In operation, when a predetermined rear impact load is exerted on the seat assembly 10, a seat occupant force is exerted on the inner occupant support frame 140. The shelves 192, 194 fracture in response to a predetermined load allowing the respective hooks 182 and torso support bar 146 to slide, or travel along their respective channels 188, 190 until the hooks 182 engage with the torso support bar 146. The spring coils 147 allow the torsion bars 142, 144' and torso support bar 146 to pivot rearwardly behind the outer peripheral frame 66 while the wire rods 180 pivot with respect to the pivot brackets 118 forming a cradle between the outer peripheral frame 66 to secure and support the seat occupant. The head restraint 108 operates independent of the inner occupant support frame 140, however, also still rotates against the frictional force of the pivot brackets 118 to support the seat occupant's head.

Figure 16 shows yet another alternative embodiment of a seat assembly 10 and inner occupant support frame 140. The inner occupant support frame 140 of the alternative embodiment of Figure 16 includes the wire rods180 having the first end pivotally connected to the upper seat back support plate 138 of the head restraint 108 and a second end forming a U-shaped hook 182 operatively connected to the torso support bar 146 by displacable connection members 184. In this embodiment, the displacement of the inner occupant support frame 140 also automatically rotates, or articulates, the head restraint 108 about the pivot brackets 118 to support the seat occupant's head. Therefore, the head restraint 108 and the inner occupant support frame 140 simultaneously displace from the normal seating position and generally upright position to the impact displacement position in response to the predetermined rear impact load on the seat assembly 10.

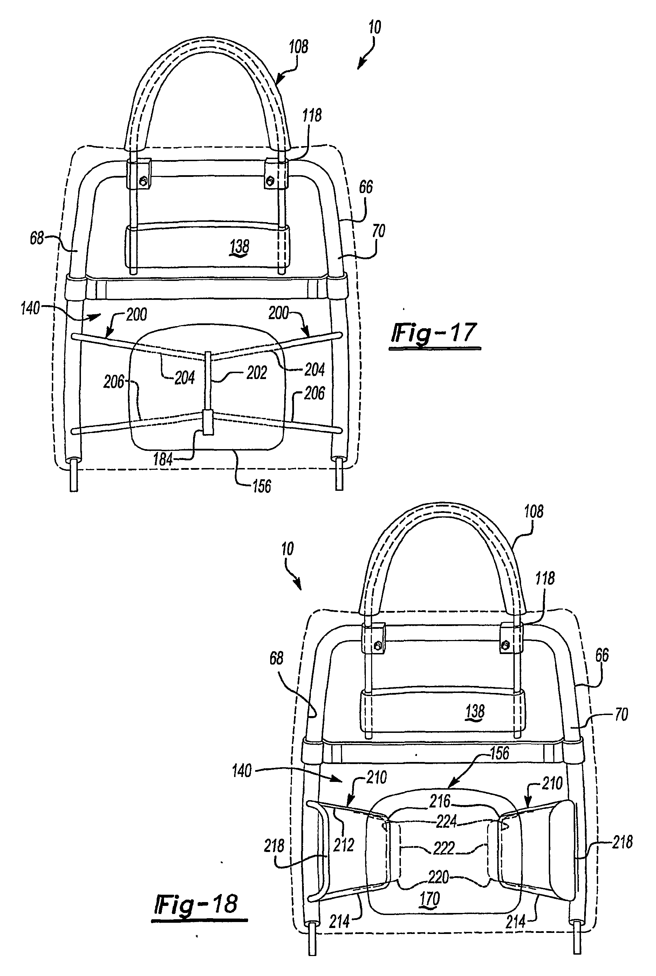

Figure 17 discloses still another alternative embodiment of a seat assembly 10 and inner occupant support frame 140. The inner occupant support frame 140 includes a pair of generally U-shaped side support rods 200 extending laterally between each of the respective inboard and outboard side support bars 68, 70 of the outer peripheral frame 66 and the lumbar support assembly 156. The support rods 200 include a pair of spaced apart lateral rods 204, 206 extending from the respective inboard and outboard side support bars 68, 70 and interconnected by a vertical bar member 202 connected to the center portion of the lumbar support assembly 156. The side support rods 200 pivot about the inboard and outboard side support bars 68, 70 in response to the predetermined rear impact force on the seat assembly 10 and inner occupant support frame 140 to cradle the seat occupant between the outer peripheral frame 66. A breakaway displacable connection member 184 interconnects the vertical bar member 202 and the lower lateral rods 206 of the support rods 200 such that when an impact load is exerted upon the seat 10 beyond a designated load, the connection member 184 releases the vertical bar 202 and allows the lower lateral rods 206 to straighten, thereby providing rearward displacement of the inner occupant support frame 140.

Finally, Figure 18 discloses yet another alternative embodiment of a seat assembly 10 and inner occupant support frame 140. The inner occupant support frame 140 again includes a pair of generally rectangular side support rods 210 extending laterally between each of the respective inboard and outboard side support bars 68, 70 of the outer peripheral frame 66 and the lumbar support assembly 156. The side support rods 210 include a pair of spaced apart rods 212, 214 interconnected at a first end by a cross bar member 216 and interconnected at an opposite second end by a bolster support rod 218. The cross bar members 216 are operatively connected to the adjacent sides of the lumbar support assembly 156 and the second ends of the lateral rods 212, 214 are pivotally connected to the respective inboard and outboard side support bars 68, 70. The bolster support rods 218 project outwardly toward the front of the seat 10, i.e., toward the seat cushion, to form a bolster support frame. The rearward face of the lumbar support panel 170 includes a pair of vertical slots 220 for receiving the cross bar members 216 therein. Each slot 220 includes a first shelf 222 for securing and supporting the cross bar members 216 with the seat in the normal occupant seating position. Each slot 220 further includes a second shelf 224 spaced from the first shelf 222 for securing and supporting the cross bar members 216 in the impact displacement position. Again, when a predetermined rear impact force is exerted on the seat assembly 10 and inner occupant support frame 140, the lumbar support assembly 156 is forced rearwardly, behind the outer peripheral frame 66. The side support rods 210 pivot about the respective inboard and outboard side support bars 68, 70 to cradle the seat occupant between the outer peripheral frame 66. The slots 220 allow the cross bar members 216 to displace from the first shelf 222 to the second shelf 224 permitting rearward movement of the lumbar 156 and inner occupant support frame 140. Additionally the side support rods 210 also pivot and retract the bolster support rods 218 inwardly toward the center of the seat back 16 to support and retain the sides of the seat occupant against the inner occupant support frame 140 and between the outer peripheral frame 66. It should be appreciated that many variations of the inner occupant support frame and pivotal connections to the outer peripheral frame may be employed without varying from the scope of the invention.

The present invention has been described in an illustrative manner. It is to be understood that the terminology, which has been used, is intended to be in the nature of words of description rather than of limitation.

Many modifications and variations of the present invention are possible in light of the above teachings. Therefore, within the scope of the appended claims, the present invention may be practiced other than as specifically described.

## Claims

1. A seat assembly (10) for supporting a seat occupant in an automotive vehicle comprising:
a seat cushion (14) for supporting the seat occupant on said seat assembly (10);
a seat back (16) extending longitudinally between a lower portion operatively coupled to said seat cushion (14) and an upper portion (20) for supporting the seat occupant in an upright position;
said seat back (16) including an outer peripheral frame member (66) and an inner occupant support frame (140) said outer peripheral frame member (66) includes an inboard side support bar (68) spaced from an outboard side support bar (70) and interconnected at one end by a upper support bar (75) to define a generally U-shaped outer peripheral frame member. With said inner occupant support frame (140) being operatively connected and supported by said outer peripheral frame member (66) and movable from an occupant support position to an impact displacement position extending rearwardly of said outer peripheral frame member (66), and a displacable connection unit operatively connecting said inner occupant support frame (140) and said outer peripheral frame (66) for maintaining said inner occupant support frame (140) in said occupant support position during normal seat occupant use and for providing movement of said inner occupant support frame (140) to said impact displacement position in response to a predetermined impact load exerted on said seat assembly (10), **characterized in that** said displacable connection unit includes a lateral torsion spring element (141) having a torso support bar (146) having opposite ends and extending laterally between said opposing spaced apart side support bars (68, 70) and a pair of spaced apart torsion bars (142, 144) extending from each end of said torso support bar (146) to said respective adjacent side support bar (68, 70), a spring coil (147) interconnecting each of said torsion bars (142, 144) to said respective side support bar (68, 70) for providing resilient displacement of said inner occupant support frame (140) between said occupant support position and said impact displacement position, and wherein said inner occupant support frame (140) includes a pair of generally parallel spaced apart resilient straps (148, 150) positioned between said inboard and outboard side support bars (68, 70) and extending between a first end coupled to said torso support bar (146) adjacent the respective torsion bars (142, 144) and a second end operatively coupled to said upper support bar (75) of said outer peripheral frame 66.

2. A seat assembly as set forth in claim 1 wherein said inner occupant support frame (140) includes a lumbar support assembly (156) having a planar support plate (158) pivotally connected to said torso support bar (146) between said spaced apart resilient straps (148, 150).

3. A seat assembly as set forth in claim 2 wherein said lumbar support assembly (156) includes a contoured lumbar back plate (170) operatively coupled to said planar support plate (158) facing said seat cushion (14).

4. A seat assembly as set forth in claim 3 wherein said lumbar support assembly (156) includes at least one inflatable bladder (162) coupled between said plate (158) and said contoured lumbar back plate (170) for selective articulating said lumbar back plate (170) relative to said planar support plate (158).

5. A seat assembly as set forth in claim 4 further including a head restraint assembly (108) operatively coupled to each of said outer peripheral frame (66) and said inner occupant support frame (140) for supporting the seat occupant's head in each of said occupant support position and said impact displacement position.

6. A seat assembly as set forth in claim 5 wherein said head restraint assembly includes a pair of upright head restraint posts (112) each pivotally coupled to said upper support bar (75) of said outer peripheral frame (66) by a pivot bracket (118).

7. A seat assembly as set forth in claim 6 wherein said head restraint posts (112) extend from distal ends spaced below said upper support bar (75) and between said side support bars (68, 70) to an upper arc portion (114) to define a generally U-shaped frame member.

8. A seat assembly as set forth in claim 7 wherein said head restraint assembly (108) includes an upper seat back support plate (138) fixedly secured to said distal ends of said head restraint posts (112) and extending laterally between said side support bars (68, 70) for pivoting said head restraint assembly (108) about said upper support bar (75) in response to said inner occupant support frame (140) displacing between said occupant support position and said impact displacement position.

9. A seat assembly as set forth in claim 8 further including a linear recliner mechanism (74, 76) coupled between said seat cushion (14) and said seat back (16) for selectively adjusting said seat back (16) between a range of angular reclined positions relative to said seat cushion (14).

10. A seat assembly as set forth in claim 9 wherein said linear recliner mechanism includes a upper cylinder (78) having a first end pivotally attached to one of said inboard and outboard side support bar (68, 70) of said outer peripheral frame (66) and a second open end, a lower piston (84) having a first end telescopingly received in said second open end of said upper cylinder (78) and a second end pivotally attached to said seat cushion (14), and a locking mechanism (88) engagable between said upper cylinder (78) and said lower piston (84) for locking and retaining said linear recliner mechanism (74, 76) within said range of reclined positions.

11. A seat assembly as set forth in claim 10 further including at least one tension spring (94, 96) extending between said seat back (16) and said seat cushion (14) adjacent said linear recliner mechanism (74, 76) for biasing said seat back (16) toward said upright position.

12. A seat assembly (10) for supporting a seat occupant in an automotive vehicle comprising:
a seat cushion (14) for supporting the seat occupant on said seat assembly (10);
a seat back (16) extending longitudinally between a lower portion operatively coupled to said seat cushion (14) and an upper portion (20) for supporting the seat occupant in an upright position;
said seat back (16) including an outer peripheral frame member (66) and an inner occupant support frame (140) said outer peripheral frame member (66) includes an inboard side support bar (68) spaced from an outboard side support bar (70) and interconnected at one end by a upper support bar (75) to define a generally U-shaped outer peripheral frame member, with said inner occupant support frame (140) being operatively connected and supported by said outer peripheral frame member (66) and movable from an occupant support position to an impact displacement position extending rearwardly of said outer peripheral frame member (66), and a displacable connection unit operatively connecting said inner occupant support frame (140) and said outer peripheral frame (66) for maintaining said inner occupant support frame (140) in said occupant support position during normal seat occupant use and for providing movement of said inner occupant support frame (140) to said impact displacement position in response to a predetermined impact load exerted on said seat assembly (10); **characterized in that**, said displacable connection unit includes a lateral torsion spring element (141) having a torso support bar (146) having opposite ends and extending laterally between said opposing spaced apart side support bars (68, 70) and a pair of spaced apart torsion bars (142, 144) extending from each end of said torso support bar (146) to said respective adjacent side support bar (68, 70), a spring coil (147) interconnecting each of said torsion bars (142, 144) to said respective side support bar (68, 70) for providing resilient displacement of said inner occupant support frame (140) between said occupant support position and said impact displacement position and wherein said inner occupant support frame (140) includes a pair of generally parallel spaced apart and longitudinally extending wire rods (180) positioned between said inboard and outboard side support bars (68, 70) and extending between a first end coupled to said torso support bar (146) adjacent the respective torsion bars (142, 144) and a second end operatively coupled to said upper support bar (75) of said outer peripheral frame (66), and a cylindrical fracturable body member (184) coupled between each of said first ends of said wire rods (180) and said torso support bar (146).

13. A seat assembly as set forth in claim 12 wherein said body member (184) includes first and second elongated channels (188, 190) extending between opposing ends of said body member for slidably receiving said first end of said wire rod (180) and said torso support bar (146) respectively.

14. A seat assembly as set forth in claim 13 wherein said body member (184) includes a first shelf (192) closing a portion of said first channel (188) for supporting said wire rod (180) thereon adjacent one end of said body member and a second shelf (194) closing a portion of said second channel (190) for supporting said torso support bar (146) thereon adjacent the opposite end of said body member defining a displacement space therebetween.

15. A seat assembly as set forth in claim 14 wherein said first and second shelves (192, 194) are fracturable in response to a predetermined load force to allow ends of said wire rods (180) and said torso support bar (146) to slide along said respective first and second channels (188, 190) through said displacement space for engagement and displacement of said inner occupant support frame (140) from said occupant support position to said impact displacement position.

## Patentansprüche

1. Sitzanordnung (10) zum Unterstützen eines Sitzbenutzers in einem Kraftfahrzeug, mit:
einem Sitzkissen (14), das den Sitzbenutzer auf der Sitzanordnung (10) unterstützt,
einer Sitzlehne (16), die sich in Längsrichtung zwischen einem unteren Abschnitt, der mit dem Sitzkissen (14) funktional gekoppelt ist, und einem oberen Abschnitt (20) erstreckt, um den Sitzbenutzer in einer aufrechten Position zu unterstützen,
wobei die Sitzlehne (16) ein äußeres Umfangsrahmenelement (66) und einen inneren Benutzerunterstützungsrahmen (140) umfasst, wobei das äußere Umfangsrahmenelement (66) eine innenseitige Unterstützungsstange (68), die von einer außenseitigen Unterstützungsstange (70) beabstandet ist, die an einem Ende durch eine obere Unterstützungsstange (75) miteinander verbunden sind, um ein im wesentlichen U-förmiges äußeres Umfangsrahmenelement zu definieren, aufweist, wobei der innere Benutzerunterstützungsrahmen (140) mit dem äußeren Umfangsrahmenelement (66) funktional verbunden und durch dieses unterstützt ist und aus einer Benutzerunterstützungsposition in eine Aufprallverlagerungsposition, die sich von dem äußeren Umfangsrahmenelement (66) nach hinten erstreckt, beweglich ist, und
einer verlagerbaren Verbindungseinheit, die den inneren Benutzerunterstützungsrahmen (140) und den äußeren Umfangsrahmen (66) funktional verbindet, um den inneren Benutzerunterstützungsrahmen (140) während der normalen Verwendung durch den Sitzbenutzer in der Benutzerunterstützungsposition zu halten und um in Reaktion auf eine vorgegebene Aufpralllast, die auf die Sitzanordnung (10) ausgeübt wird, eine Bewegung des inneren Benutzerunterstützungsrahmens (140) in die Aufprallverlagerungsposition zu schaffen,
**dadurch gekennzeichnet, dass**
die verlagerbare Verbindungseinheit ein seitliches Torsionsfederelement (141) mit einer Torsounterstützungssstange (145) mit gegenüberliegenden Enden, die sich zwischen den gegenüberliegenden beabstandeten seitlichen Unterstützungsstangen (68, 70) seitlich erstreckt, einem Paar beabstandeter Torsionsstangen (142, 144), die sich von jedem Ende der Torsounterstützungsstangen (146) zu der entsprechenden benachbarten seitlichen Unterstützungsstange (68, 70) erstrecken, und einer Schraubenfeder (147), die jede der Torsionsstangen (142, 144) mit der entsprechenden seitlichen Unterstützungsstange (68, 70) verbindet, um eine elastische Verlagerung des inneren Benutzerunterstützungsrahmens (140) zwischen der Benutzerunterstützungsposition und der Aufprallverlagerungsposition zu schaffen, aufweist und wobei der innere Benutzerunterstützungsrahmen (140) ein Paar im wesentlichen paralleler, beabstandeter elastischer Bänder (148, 150) aufweist, die zwischen der innenseitigen und der außenseitigen Unterstützungsstange (68, 70) angeordnet sind und sich zwischen einem ersten Ende, das mit der Torsounterstützungsstange (146) in der Nähe der entsprechenden Torsionsstange (142, 144) gekoppelt ist, und einem zweiten Ende, das mit der oberen Unterstützungsstange (75) des äußeren Umfangsrahmens (66) funktional gekoppelt ist, erstreckt.

2. Sitzanordnung nach Anspruch 1, bei dem der innere Benutzerunterstützungsrahmen (140) eine Lendenunterstützungsanordnung (146) umfasst, die eine ebene Unterstützungsplatte (158) aufweist, die an der Torsounterstützungsstange (146) zwischen den beabstandeten elastischen Bändern (148, 150) angelenkt ist.

3. Sitzanordnung nach Anspruch 2, bei der die Lendenunterstützungsanordnung (156) eine konturierte Lendengegendruckplatte (170) umfasst, die mit der ebenen Unterstützungsplatte (158), die dem Sitzkissen (14) zugewandt ist, funktional gekoppelt ist.

4. Sitzanordnung nach Anspruch 3, bei der die Lendenunterstützungsanordnung (156) mindestens einen aufblasbaren Balg (162) umfasst, der mit der ebenen Unterstützungsplatte (158) und mit der konturierten Lendengegendruckplatte (170) gekoppelt ist, um die Lendengegendruckplatte (170) in Bezug auf die ebene Unterstützungsplatte (158) wahlweise auszulenken.

5. Sitzanordnung nach Anspruch 4, die des weiteren eine Kopfstützenanordnung (108) umfasst, die sowohl mit dem äußeren Umfangsrahmen (66) als auch mit dem inneren Benutzerunterstützungsrahmen (140) funktional gekoppelt ist, um den Kopf des Sitzbenutzers sowohl in der Benutzerunterstützungsposition als auch in der Aufprallverlagerungsposition zu unterstützen.

6. Sitzanordnung nach Anspruch 5, bei der die Kopfstützenanordnung ein Paar aufrechter Kopfstützenstangen (112) aufweist, wovon jede mit der oberen Unterstützungsstange (75) des äußeren Umfangsrahmens durch einen Schwenkarm (118) schwenkbar gekoppelt ist.

7. Sitzanordnung nach Anspruch 6, bei der sich die Kopfstützenstangen (112) von distalen Enden, die unterhalb der oberen Unterstützungsstange (75) beabstandet sind und sich zwischen den seitlichen Unterstützungsstangen (68, 70) befinden, zu einem oberen gekrümmten Abschnitt (114) erstrecken, um ein im wesentlichen U-förmiges Rahmenelement zu definieren.

8. Sitzanordnung nach Anspruch 7, bei der die Kopfstützenanordnung (108) eine obere Sitzlehnen Unterstützungsplatte (138) aufweist, die an den distalen Enden der Kopfstützenstangen (112) fest angebracht sind und sich zwischen den seitlichen Unterstützungsstangen (68, 70) seitlich erstrecken, um die Kopfstützenanordnung (108) in Reaktion auf die Verlagerung des inneren Benutzerunterstützungsrahmens (140) zwischen der Benutzerunterstützungsposition und der Aufprallverlagerungsposition um die obere Unterstützungsstange (75) zu schwenken.

9. Sitzanordnung nach Anspruch 8, die des weiteren einen Linearlehnenverstellmechanismus (74, 76) umfasst, der zwischen das Sitzkissen (14) und die Sitzlehne (16) gekoppelt ist, um die Sitzlehne (16) wahlweise innerhalb eines Bereichs von Winkelverstellpositionen in Bezug auf das Sitzkissen (14) einzustellen.

10. Sitzanordnung nach Anspruch 9, bei der der Linearlehnenverstellmechanismus einen oberen Zylinder (78) umfasst, von dem ein erstes Ende entweder an der innenseitigen oder an der außenseitigen Unterstützungsstange (68; 70) des äußeren Umfangsrahmens (66) schwenkbar angebracht ist und ein zweites Ende offen ist, einen unteren Kolben (84) umfasst, von dem ein erstes Ende in dem zweiten offenen Ende des oberen Zylinders (78) teleskopartig aufgenommen ist und ein zweites Ende an dem Sitzkissen (14) schwenkbar angebracht ist, und einen Verriegelungsmechanismus (88) umfasst, der zwischen dem oberen Zylinder (78) und dem unteren Kolben (84) in Eingriff gelangen kann, um den Linearlehnenverstellmechanismus (74, 76) innerhalb des Bereichs von Verstellpositionen zu verriegeln und zu halten.

11. Sitzanordnung nach Anspruch 10, die des weiteren mindestens eine Spannfeder (94, 96) umfasst, die sich zwischen der Sitzlehne (16) und dem Sitzkissen (14) in der Nähe des Linearlehnenverstellmechanismus (74, 76) erstreckt, um die Sitzlehne (16) in die aufrechte Position vorzubelasten.

12. Sitzanordnung (10) für die Unterstützung eines Sitzbenutzers in einem Kraftfahrzeug, mit:
einem Sitzkissen (14), das den Sitzbenutzer auf der Sitzanordnung (10) unterstützt,
einer Sitzlehne (16), die sich in Längsrichtung zwischen einem unteren Abschnitt, der mit dem Sitzkissen (14) funktional gekoppelt ist, und einem oberen Abschnitt (20) erstreckt, um den Sitzbenutzer in einer aufrechten Position zu unterstützen,
wobei die Sitzlehne (16) ein äußeres Umfangsrahmenelement (66) und einen inneren Benutzerunterstützungsrahmen (140) aufweist, wobei das äußere Umfangsrahmenelement (66) eine innenseitige Unterstützungsstange (68), die von einem außenseitigen Unterstützungsstab (70) beabstandet ist, die jeweils an einem Ende durch eine obere Unterstützungsstange (75) miteinander verbunden sind, um ein im wesentlichen U-förmiges äußeres Umfangsrahmenelement zu definieren, aufweist, wobei der innere Benutzerunterstützungsrahmen (140) mit dem äußeren Umfangsrahmenelement (66) funktional verbunden und durch dieses unterstützt ist und von einer Benutzerunterstützungsposition in eine Aufprallverlagerungsposition, die sich von dem äußeren Umfangsrahmenelement (66) nach hinten erstreckt, beweglich ist, und
einer verlagerbaren Verbindungseinheit, die den inneren Benutzerunterstützungsrahmen (140) und den äußeren Umfangsrahmen (66) funktional verbindet, um während des normalen Gebrauchs des Sitzes durch den Benutzer den inneren Benutzerunterstützungsrahmen (140) in der Benutzerunterstützungsposition zu halten und um in Reaktion auf eine vorgegebene Aufpralllast, die auf die Sitzanordnung (10) ausgeübt wird, eine Bewegung des inneren Benutzerunterstützungsrahmens (140) in die Aufprallverlagerungsposition zu schaffen,
**dadurch gekennzeichnet, dass**
die verlagerbare verbindungseinheit ein seitliches Torsionsfederelement (141) mit einer Torsounterstützungsstange (146) mit gegenüberliegenden Enden, die sich seitlich zwischen den gegenüberliegenden beabstandeten seitlichen Unterstützungsstangen (68, 70) erstreckt, einem Paar beabstandeter Torsionsstangen (142, 144), die sich von jedem Ende der Torsounterstützungsstange (146) zu der jeweiligen benachbarten seitlichen Unterstützungsstange (68, 70) erstrecken, und einer Schraubenfeder (147), die jede der Torsionsstangen (142, 144) mit der entsprechenden seitlichen Unterstützungsstange (68, 70) verbindet, um eine elastische Verlagerung des inneren Benutzerunterstützungsrahmens (140) zwischen der Benutzerunterstützungsposition und der Aufprallverlagerungsposition zu schaffen, aufweist, und wobei der innere Benutzerunterstützungsrahmen (140) ein Paar im wesentlichen paralleler beabstandeter und in Längsrichtung verlaufender Drahtstäbe (180) umfasst, die zwischen der innenseitigen und der außenseitigen Unterstützungsstange (68, 70) positioniert sind und sich zwischen einem ersten Ende, das mit der Torsounterstützungsstange (146) in der Nähe der entsprechenden Torsionsstangen (142, 144) und einem zweiten Ende, das mit der oberen Unterstützungsstange (75) des äußeren Umfangsrahmens (66) funktional gekoppelt ist, erstrecken, und ein zylindrisches, zerbrechbares Körperelement (184), das zwischen jedes erste Ende der Drahtstäbe (180) und die Torsounterstützungsstange (148) gekoppelt ist, aufweist.

13. Sitzanordnung nach Anspruch 12, bei der das Körperelement (184) einen ersten und einen zweiten langgestreckten Kanal (188, 190) umfasst, die sich zwischen gegenüberliegenden Enden des Körperelements erstrecken, um das erste Ende des Drahtstabes (180) bzw. die Torsounterstützungsstange (146) gleitend aufzunehmen.

14. Sitzanordnung nach Anspruch 13, bei der das Körperelement (184) einen ersten Absatz (192), der einen Abschnitt des ersten Kanals (188) verschließt, um den Drahtstab (180) in der Nähe eines Endes des Körperelements zu unterstützen, und einen zweiten Absatz (194), der einen Abschnitt des zweiten Kanals (190) verschließt, um die Torsounterstützungsstange (146) in der Nähe des gegenüberliegenden Endes des Körperelements, das dazwischen einen Verlagerungsraum definiert, zu unterstützen, aufweist.

15. Sitzanordnung nach Anspruch 14, bei der der erste und der zweite Absatz (192, 194) in Reaktion auf eine vorgegebene Belastungskraft brechen können, um den Enden der Drahtstäbe (180) und der Torsounterstützungsstange (146) zu ermöglichen, längs des ersten bzw. des zweiten Kanals (188, 190) durch den Verlagerungsraum zu gleiten, um mit dem inneren Benutzerunterstützungsrahmen (140) in Eingriff zu gelangen und ihn aus der Benutzerunterstützungsposition in die Aufprallverlagerungsposition zu verlagern.

## Revendications

1. Ensemble formant siège (10) pour supporter un occupant d'un siège dans un véhicule automobile, comprenant:
un coussin de siège (14) pour supporter l'occupant du siège sur ledit ensemble formant siège (10);
un dossier de siège (16) s'étendant longitudinalement entre une portion inférieure fonctionnellement couplée audit coussin de siège (14) et une portion supérieure (20) pour supporter l'occupant du siège dans une position redressée;
ledit dossier de siège (16) incluant un élément de cadre périphérique extérieur (66) et un cadre de support d'occupant intérieur(140), ledit élément de cadre périphérique extérieur (66) incluant une barre de support latérale intérieure (68) espacée d'une barre de support latérale extérieure (70) et interconnectées à une extrémité par une barre de support supérieur (75) pour définir un élément de cadre périphérique extérieur généralement en forme de U, tel que ledit cadre de support d'occupant intérieur (140) est fonctionnellement connecté et supporté par ledit élément de cadre périphérique extérieur (66) et mobile depuis une position de support de l'occupant vers une position déplacée en cas d'impact qui s'étend vers l'arrière dudit élément de cadre périphérique extérieur (66);
et une unité de connexion déplaçable assurant une connexion fonctionnelle dudit cadre de support d'occupant intérieur (140) et dudit cadre périphérique extérieur (66) pour maintenir ledit cadre de support d'occupant intérieur (140) dans ladite position de support d'occupant pendant une utilisation d'occupation normale du siège et pour assurer un mouvement dudit cadre de support d'occupant intérieur (140) vers ladite position déplacée en cas d'impact en réponse à une charge d'impact exercée sur ledit ensemble formant siège (10), **caractérisé en ce que** ladite unité de connexion déplaçable inclut un élément formant ressort de torsion latéral (141) ayant une barre de support de torse (146) ayant des extrémités opposées et s'étendant latéralement entre lesdites deux barres de support latérales espacées opposées (68, 76) et une paire de barres de torsion écartées (142, 144) s'étendant depuis chaque extrémité de ladite barre de support de torse (146) vers ladite barre de support latérale adjacente respective (68, 70), un ressort à boudin (147) qui interconnecte chacune desdites barres de torsion (142, 144) à ladite barre de support latérale respective (68, 70) pour permettre un déplacement élastique dudit cadre de support d'occupant (140) intérieur entre ladite position de support d'occupant et ladite position déplacée en cas d'impact, et dans lequel ledit cadre de support d'occupant (140) intérieur inclut une paire de sangles élastiques espacées généralement parallèles (148, 150) positionnées entre ladite barre de support latérale intérieure et ladite barre de support latérale extérieure (68, 70) et s'étendant entre une première extrémité couplée à ladite barre de support de torse (146) adjacente aux barres de torsion respectives (142, 144) et une seconde extrémité fonctionnellement couplée à ladite barre de support supérieure (75) dudit cadre périphérique extérieur (66).

2. Ensemble formant siège selon la revendication 1, dans lequel ledit cadre de support d'occupant intérieur (140) inclut un ensemble formant support lombaire (156) ayant une plaque de support plane (158) connectée en pivotement à ladite barre de support de torse (146) entre lesdites sangles élastiques espacées (148, 150).

3. Ensemble formant siège selon la revendication 2, dans lequel ledit ensemble formant support lombaire (156) inclut une plaque postérieure lombaire conformée (170) fonctionnellement couplée à ladite plaque de support plane (158) en face dudit coussin de siège (14).

4. Ensemble formant siège selon la revendication 3, dans lequel ledit ensemble formant support lombaire (156) inclut au moins une poche gonflable (162) couplée entre ladite plaque de support plane (158) et ladite plaque postérieure lombaire conformée (170) pour assurer une articulation sélective de ladite plaque postérieure lombaire (170) par rapport à ladite plaque de support plane (158).

5. Ensemble formant siège selon la revendication 4, incluant en outre un ensemble formant retenue de tête (108) fonctionnellement couplé à chacun des cadres que sont ledit cadre périphérique extérieur (66) et ledit cadre de support d'occupant intérieur (140) pour supporter la tête de l'occupant du siège dans chacune des positions que sont ladite position de support d'occupant et ladite position déplacée en cas d'impact.

6. Ensemble formant siège selon la revendication 5, dans lequel ledit ensemble formant retenue de tête inclut une paire de piliers de retenue de tête verticaux (112), couplés chacun de façon pivotante à ladite barre de support supérieure (75) dudit cadre périphérique extérieur (66) par une platine de pivot (118).

7. Ensemble formant siège selon la revendication 6, dans lequel lesdits piliers de retenue de tête (112) s'étendent depuis des extrémités distales espacées au-dessous de ladite barre de support supérieure (75) et entre lesdites barres de support latérales (68, 70) vers une portion supérieure arquée (114) pour définir un élément de cadre généralement en forme de U.

8. Ensemble formant siège selon la revendication 7, dans lequel ledit ensemble formant retenue de tête (108) inclut une plaque de support supérieure de dossier (138) attachée de manière fixe auxdites extrémités distales desdits piliers de retenue de tête (112) et s'étendant latéralement entre lesdites barres de support latérales (68, 70) pour faire pivoter ledit ensemble formant retenue de tête (108) autour de ladite barre de support supérieure (75) en réponse audit cadre de support d'occupant (140) intérieur qui se déplace entre ladite position de support d'occupant et ladite position déplacée en cas d'impact.

9. Ensemble formant siège selon la revendication 8, incluant en outre un mécanisme d'inclinaison linéaire (74, 76) couplé entre ledit coussin de siège (14) et ledit dossier de siège (16) pour ajuster sélectivement ledit dossier de siège (16) entre une plage de positions inclinées angulaires par rapport audit coussin de siège (14).

10. Ensemble formant siège selon la revendication 9, dans lequel ledit mécanisme d'inclinaison linéaire inclut un cylindre supérieur (78) ayant une première extrémité attachée en pivotement à l'une desdites barres de support parmi la barre de support latérale intérieure et la barre de support latérale extérieure (68, 70) dudit cadre périphérique extérieur (66) et une seconde extrémité, un piston inférieur (84) ayant une première extrémité reçue de façon télescopique dans ladite seconde extrémité ouverte dudit cylindre supérieur (78) et une seconde extrémité attachée en pivotement audit coussin de siège (14), et un mécanisme de verrouillage (88) susceptible d'être engagé entre ledit cylindre supérieur (78) et ledit piston inférieur (84) pour verrouiller et pour retenir ledit mécanisme d'inclinaison linéaire (74, 76) dans ladite plage de positions inclinées.

11. Ensemble formant siège selon la revendication 10, incluant en outre au moins un ressort de traction (94, 96) qui s'étend entre ledit dossier de siège (16) et ledit coussin de siège (14) en position adjacente audit mécanisme d'inclinaison linéaire (74, 76) pour repousser ledit dossier de siège (16) vers ladite position redressée.

12. Ensemble formant siège (10) pour supporter un occupant d'un siège dans un véhicule automobile, comprenant :
un coussin de siège (14) pour supporter l'occupant du siège sur ledit ensemble formant siège (10) ;
un dossier de siège (16) s'étendant longitudinalement entre une portion inférieure fonctionnellement couplée audit coussin de siège (14) et une portion supérieure (20) pour supporter l'occupant du siège dans une position redressée ;
ledit dossier de siège (16) incluant un élément de cadre périphérique extérieur (66) et un cadre de support d'occupant intérieur (140), ledit élément de cadre périphérique extérieur (66) incluant une barre de support latérale intérieure (68) espacée depuis une barre de support latérale extérieure (70) et interconnectées à une extrémité par une barre de support supérieure (75) pour définir un élément de cadre périphérique extérieur généralement en forme de U, tel que ledit cadre de support d'occupant intérieur (140) est fonctionnellement connecté et supporté par ledit élément de cadre périphérique extérieur (66) et mobile depuis une position de support d'occupant vers une position déplacée en cas d'impact s'étendant vers l'arrière dudit élément de cadre périphérique extérieur (66) ; et
une unité de connexion déplaçable assurant fonctionnellement une connexion dudit cadre de support d'occupant intérieur (140) et dudit cadre périphérique extérieur (66) pour maintenir ledit cadre de support d'occupant intérieur (140) dans ladite position de support d'occupant pendant l'utilisation d'occupation normale du siège et pour permettre un mouvement dudit cadre de support d'occupant intérieur (140) vers ladite position déplacée en cas d'impact en réponse à une charge d'impact prédéterminée exercée sur ledit ensemble formant siège (10),
**caractérisé en ce que** ladite unité de connexion déplaçable inclut un élément formant ressort de torsion latéral (141) ayant une barre de support de torse (146) ayant des extrémités opposées et s'étendant latéralement entre lesdites barres de support latérales espacées opposées (68, 70) et une paire de barres de torsion espacées (142, 144) s'étendant depuis chaque extrémité de ladite barre de support de torse (146) vers ladite barre de support latérale adjacente respective (68, 70), un ressort à boudin (147) qui interconnecte chacune desdites barres de torsion (142, 144) avec ladite barre de support latérale respective (68, 70) pour permettre un déplacement élastique dudit cadre de support d'occupant (140) intérieur entre ladite position de support d'occupant et ladite position déplacée en cas d'impact, et dans lequel ledit cadre de support d'occupant (140) intérieur inclut une paire de tiges espacées généralement parallèles et s'étendant longitudinalement (180) qui sont positionnées entre ladite barre de support latérale intérieure et ladite barre de support latérale extérieure (68, 70) et qui s'étendent entre une première extrémité couplée à ladite barre de support de torse (146) adjacente aux barres de torsion respectives (142, 144) et une seconde extrémité fonctionnellement couplée à ladite barre de support supérieure (75) dudit cadre périphérique extérieur (66), et un élément de corps cylindrique susceptible de se fracturer (184) couplé entre chacune desdites premières extrémités desdites tiges à fil (180) et ladite barre de support de torse (148).

13. Ensemble formant siège selon la revendication 12, dans lequel ledit élément de corps (184) inclut un premier et un second canal allongé (188, 190) s'étendant entre des extrémités opposées dudit élément de corps pour recevoir en coulissement ladite première extrémité de ladite tige à fil (180) et de ladite barre de support de torse (146) respectivement.

14. Ensemble formant siège selon la revendication 13, dans lequel ledit élément de corps (184) inclut une première étagère (192) fermant une partie dudit premier canal (188) pour supporter ladite tige à fil (180) sur elle-même en position adjacente à une extrémité dudit élément de corps, et une seconde étagère (194) fermant une partie dudit second canal (190) pour supporter ladite barre de support de torse (146) sur elle-même en position adjacente à l'extrémité opposée dudit élément de corps, en définissant un espace de déplacement entre elles.

15. Ensemble formant siège selon la revendication 14, dans lequel ladite première et ladite seconde étagère (192, 194) sont susceptibles de se fracturer en réponse à une force prédéterminée pour permettre aux extrémités desdites tiges à fil (180) et de ladite barre de support de torse (146) de coulisser le long dudit premier et dudit second canal respectif (188, 190) en traversant ledit espace de déplacement pour engager et pour déplacer ledit cadre de support d'occupant (140) intérieur depuis ladite position de support d'occupant vers ladite position déplacée en cas d'impact.
